# EUROPEAN PATENT APPLICATION

(11) **EP 3 262 986 A1**
(43) Date of publication of application: **03.01.2018**
(21) Application number: 17175177.9
(22) Date of filing: 09.06.2017
(51) Int. Cl.: A47F 3/00, F16B 7/18, F16B 12/50, F16B 12/44

(54) **MUSEUM SHOWCASE**

(30) Priority: 28.06.2016 IT UA20164705
(71) Applicant: Goppion S.p.A., 20090 Trezzano sul Naviglio (MI) (IT)
(72) Inventor: GOPPION, Alessandro, I-20144 Milano (IT)
(74) Representative: Porta, Checcacci & Associati S.p.A

(57) **Abstract**

This museum showcase comprises a load-bearing frame comprising tubular beams (20) with quadrangular section connected together by at least one joint (30), and is characterized in that the joint (30) comprises two flat and parallel plates (31, 32), wherein each plate comprises a middle portion and at least two attachment wings, wherein the two attachment wings of each plate (31, 32) are respectively inserted in a first and a second of the tubular beams (20) and fixed to them.

In this way, the showcase can be designed and built in a particularly quick and easy manner. Both the beams (20) and the joints (30) can be made starting from extremely simple and cost-effective semi-finished products (tubes and plates, respectively), with elementary processes, basically simple cuts to the desired sizes.

## Description

The present invention relates to a museum showcase, i.e. a showcase intended to be placed in a display place such as a museum, an exhibition or the like and intended for the preservation and display of objects of cultural heritage, such as works of art, historical artefacts and the like, in a protected environment. The term showcase will be sometimes used hereinafter for the sake of brevity, by this however always meaning a museum showcase.

Showcases of this type must meet various requirements, in relation to the preservation and integrity of the exhibits. In particular, they should normally ensure a high level of security with respect to possible attempts of unauthorized opening or tampering, as well as ensure adequate insulation between the inner and outer environment. It is also appropriate that these showcases have a structure such as to facilitate the production processes.

To this end, manufacturers of showcases use metal materials - typically aluminium and iron - to manufacture support structures, such as a load-bearing frame and/or a showcase base; the fixed and opening walls of the showcase, typically made of transparent material, are mounted on these support structures. Normally, the transparent material used is glass.

In particular, showcases have been developed with a base surmounted by a case formed by the walls; the base houses the technical components of the showcase and is therefore normally closed by non-transparent walls to block the view of such components; in contrast, the walls of the case are wholly or largely transparent to allow viewing of the exhibits.

The frame is normally made with beams welded together and then painted. In this way, a frame can be achieved having the strength required to adequately support all the transparent walls (whose weight can be very large, in large-sized showcases) and as well as any other element or accessory of the showcase.

The Applicant has realized that structures of this type are relatively complex to be made.

The present invention therefore raises the problem of facilitating the construction of the showcase.

Accordingly, the present invention relates to a showcase as defined in claim 1. Preferred features are described in the dependent claims.

More particularly, a museum showcase according to the invention has a load-bearing frame comprising tubular beams with quadrangular section connected together by at least one joint, and is characterized in that the joint comprises two flat and parallel plates, wherein each plate comprises at least two attachment wings, wherein the two attachment wings of each plate are respectively inserted in a first and a second of the tubular beams and fixed to them.

In this way, the showcase can be designed and constructed in a particularly easy and therefore quick manner, selecting the number and size of the tubular beams according to the size of the showcase and the weight of the walls and connecting the tubular beams together with the necessary number of joints, particularly simple. Both the beams and the joints can be made starting from extremely simple and cost-effective semi-finished products (tubes and plates, respectively), with elementary processes, basically simple cuts to the desired sizes. In particular, once the beam section dimension has been defined, it is very easy to make the joints required, sizing the plates according to the size of the beam section.

However, it is also possible to easily define standard sizes for beams and joints, so as to use the same joints for showcase even very different in size, the size of the showcase imposing only the use of horizontal beams of different lengths.

Moreover, this structure allows easy and quick assembly of the showcase, as well as an equally quick and easy disassembly thereof. The quadrangular (square or rectangular) section of the tubular beams promotes the strength of the connections by means of the joints, since the plates of the joints can completely rest on the flat inner walls of the tubular beams, thus being able to transmit the mechanical strains in the best possible manner.

Preferably, the joint also comprises an attachment block having a parallelepiped shape, fixed to a first of the two plates on the opposite side with respect to the second of the two plates inserted in a third of the tubular beams of the frame, different from the first and second tubular beams in which the attachment wings are inserted and fixed, and fixed to the third of the tubular beams. In this way, it is possible to make joints with three directions (such as corner joints): in two mutually coplanar directions, the beams are connected to the joint by the attachment wings, in the third direction by the attachment block. The construction is still quick and easy.

Preferably, the joint also comprises a spacer block with parallelepiped shape, arranged between the plates and fixed to them. Such a spacer block imparts additional strength to the joint and thereby to the frame, by directly connecting the two plates together and effectively preventing any torsional or flexural deformation of the joint.

Preferably, the attachment block has a section matching the internal section of the tubular beams, so as to be able to insert therein with forcing or with minimal clearance. In this way, the connection of the joint to the third tubular beam is particularly strong and sturdy.

The attachment between parts of the joint and between the joint and the tubular beams can be accomplished in various ways, for example by means of screws. Preferably, therefore, the joint comprises first attachment screws, inserted in through holes in the first and second beams and screwed into threaded holes formed in the attachment wings of the plates; these screws ensure a solid connection between the tubular beams and the joint plates. Preferably, the joint comprises a second attachment screw, inserted in a through hole in the middle portion of the first plate and screwed into a threaded hole formed in the attachment block; this screw (a single screw or more screws) ensures a solid connection between the attachment block and the joint plate. Preferably, the joint comprises a third attachment screw, inserted in a through hole in the third beam and screwed into a threaded hole formed in the attachment block; this screw (a single screw or multiple screws) ensures a solid connection between the attachment block and the third beam. Preferably, the joint comprises a fourth attachment screw, inserted in a through hole in the middle portion of a plate and in a through hole of the spacer block and screwed into a threaded hole formed in the middle portion of the other plate; this screw (a single screw or multiple screws) ensures a solid connection between the two plates and the spacer block.

Preferably, the spacer block and the middle portions of the plates attached to it are outside of the tubular beams, abutting at ends thereof. This allows sizing these elements so that the joints have sizes according to the size of the beams, thus preventing potentially dangerous and aesthetically unpleasing protruding edges.

A joint according to the invention, as said, comprises at least two attachment wings but it may also comprise three or four. With three attachment wings, the joint can connect two tubular beams mutually opposite at 180° and a beam at 90° (T configuration); with four attachment wings, the joint can connect four tubular beams mutually at 90°, two by two opposite at 180° (cross configuration). The possible presence of an attachment block allows the joint to connect a further tubular beam, orthogonal to the plane of the three or four tubular beams connected to the attachment wings.

Preferably, the joint comprises two attachment blocks having a parallelepiped shape, fixed to a middle portion of a respective one of the two plates on the opposite side with respect to the other of the two plates, inserted in a third and a fourth of the tubular beams of the frame, different from the first and second tubular beams in which the attachment wings are inserted and fixed, and fixed to the third and fourth of the tubular beams. In this way, it is possible to make joints with four or more directions (e.g., intermediate joints in a complex frame structure): in two or more mutually coplanar directions, the tubular beams are connected to the joint by the attachment wings, in the two directions orthogonal to such a plane, the tubular beams are connected to the joint by the attachment block. The construction is still quick and easy.

Preferably, the plates comprise abutment seats for the tubular beams, formed between the attachment wings and a middle portion, so that the middle portion cannot enter inside the tubular beams. This feature not only facilitates the precise fitting of the parts but also improves the transmission of strains between the tubular beams and the joint.

The tubular beams and the parts of the joints can be made of various materials. Preferably, they are made of aluminium, thus being lightweight, resistant, easy to be drilled and cut to size, cost-effective (they are available in standard sizes on the market). Preferably, the tubular beams and/or the attachment blocks and/or the spacer blocks are made of aluminium, thus being lightweight, durable, easy to be drilled and cut to size, cost-effective (they are available in standard sizes on the market); moreover, their exterior finish is excellent with no need to apply paints of any kind. Preferably, the plates are made of sheet iron or steel; although obviously being heavier and less easy to machine than aluminium, sheet iron or steel is preferred in this case to ensure the best resistance to deformation to the plates.

In a preferred embodiment, the plates are completely inserted into the beams tubular, cut at 45°; this structure has the advantage of completely hiding the plates inside the beams.

Further features and advantages of a museum showcase according to the present invention will appear more clearly from the following description of some preferred embodiments thereof, made with reference to the accompanying drawings. In such drawings:
- fig. 1 is a schematic perspective view of a showcase according to the invention;
- fig. 2 is a schematic perspective view of a part of the frame of the showcase in fig. 1;
- fig. 3 is an enlarged scale view of a joint of the frame in fig. 2;
- fig. 4 is an exploded view of the joint in fig. 3;
- fig. 5 is an exploded view of a joint similar to the joint in fig. 3 and 4, adapted to connect only two beams;
- fig. 6 is an exploded view of a joint similar to the joint in fig. 3 and 4, adapted to connect six beams;
- fig. 7 is a schematic perspective view of part of the frame in fig. 1, according to a different embodiment of the invention;
- fig. 8 is an enlarged scale view of a joint of the frame in fig. 7;
- fig. 9 is an exploded view of the joint in fig. 8;
- fig. 10 is an enlarged scale view of a joint similar to the joint in fig. 8 and 9, adapted to connect only two beams;
- fig. 11 is an exploded view of the joint in fig. 10.

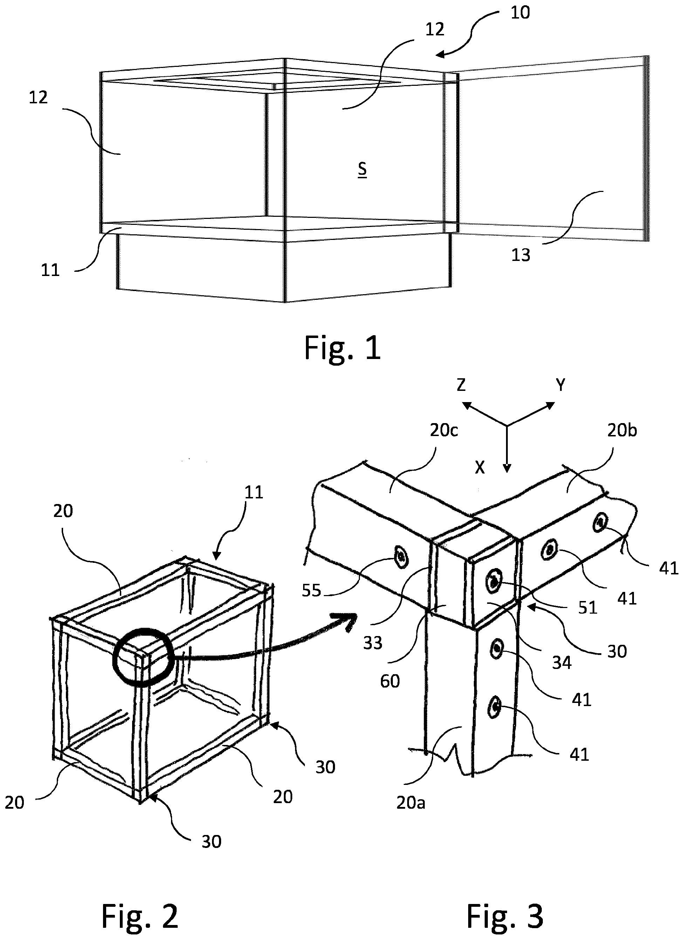

Figure 1 schematically shows a showcase **10** according to the invention. Showcase 10 comprises a frame **11,** 3 fixed walls **12** and an opening wall **13,** which are all supported by the load-bearing frame 11 and define an exhibit space **S** of showcase 10.

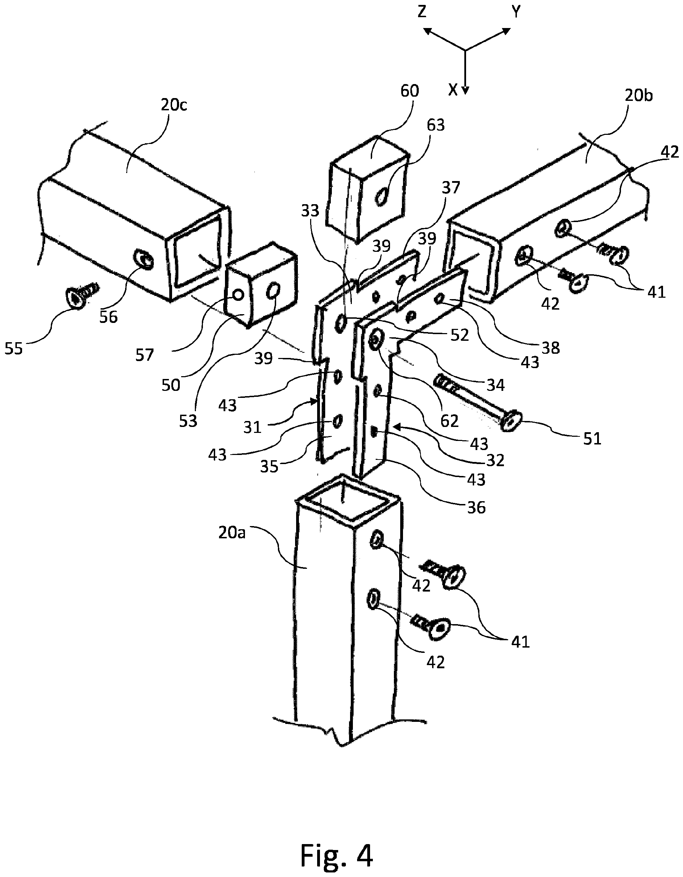

Frame 11 of showcase 10 is shown in figure 2. Frame 11 comprises tubular beams **20** with quadrangular section (in particular, square) connected together by joints **30,** one of which is better shown in figures 3 and 4.

Joint 30 shown connects three tubular beams 20 together, arranged at 90° each one with respect to the plane of the others, i.e. according to three classical orthogonal axes **X, Y, Z.** Joint 30 comprises two plates **31** and **32,** flat and parallel to each other according to the plane defined by axes XY. Plates 31 and 32 are substantially L-shaped, with respective middle portions **33** and **34** and two attachment wings each: one wing **35** and one wing **37** of plate 31, one wing **36** and one wing **38** of plate 32. Wings 35 and 36 are directed according to axis X, while wings 37 and 38 are directed according to axis Y.

The attachment wings 35 and 36 are inserted in a first one of the tubular beams 20, also indicated with reference numeral **20a**, oriented according to axis X; the attachment wings 37 and 38 are inserted in a second one of the tubular beams 20, also indicated with reference numeral **20b,** oriented according to axis Y. The attachment wings -38 are attached to the respective tubular beams 20a, 20b by means of first attachment screws **41,** inserted in through holes **42** formed in the tubular beams 20a, 20b and screwed into threaded holes **43** formed in the attachment wings 35-38. In frame 11 shown, two attachment screws 41 are provided for each of the attachment wings 35-38. It is noted that the attachment wings 35-38 are perfectly lying along opposite inner walls of the tubular beams 20, due to the quadrangular section of the latter.

Joint 30 also comprises an attachment block **50,** with parallelepiped shape, attached to the middle portion 33 of plate 31, opposite to plate 32. The attachment block 50 has a section matching the internal section of the tubular beams 20, so as to be able to insert therein with forcing or with minimal clearance. The attachment block 50 is inserted in a third one of the tubular beams 20, oriented according to axis Z and also indicated with reference numeral **20c,** different from the tubular beams 20a and 20b in which the attachment wings 33-38 are inserted and attached. The attachment block 50 is fixed to plate 31 by means of a second attachment screw **51,** inserted in a through hole **52** formed in the middle portion 33 of plate 31 and screwed into a threaded hole **53** formed in the attachment block 50. Moreover, the attachment block 50 is fixed to beam 20c by means of a third attachment screw **55,** inserted in a through hole **56** formed in beam 20c and screwed into a threaded hole **57** formed in the attachment block 50.

The two plates 31 and 32 are mutually spaced apart and a spacer block **60,** with parallelepiped shape, is arranged between them. The spacer block 60 is attached between the middle portions 33 and 34 of the two plates 31 and 32 by means of the same screw 51 which, in addition to the through hole 52, crosses a through hole **62** formed in the middle portion 34 of plate 32 and another through hole **63** formed in the spacer block, as clearly seen in fig. 4.

The spacer block 60 and the middle portions 33 and 34 of plates 31 and 32 attached to it are outside of the tubular beams 20, abutting at ends thereof.

Plate 31 and 32 also comprise abutment seats, all indicated with reference numeral **39,** for providing a support to the ends of the tubular beams 20. The abutment seats 39 are formed between the attachment wings 35-38 and the respective middle portions 33 and 34, so that the latter cannot enter inside the tubular beams 20.

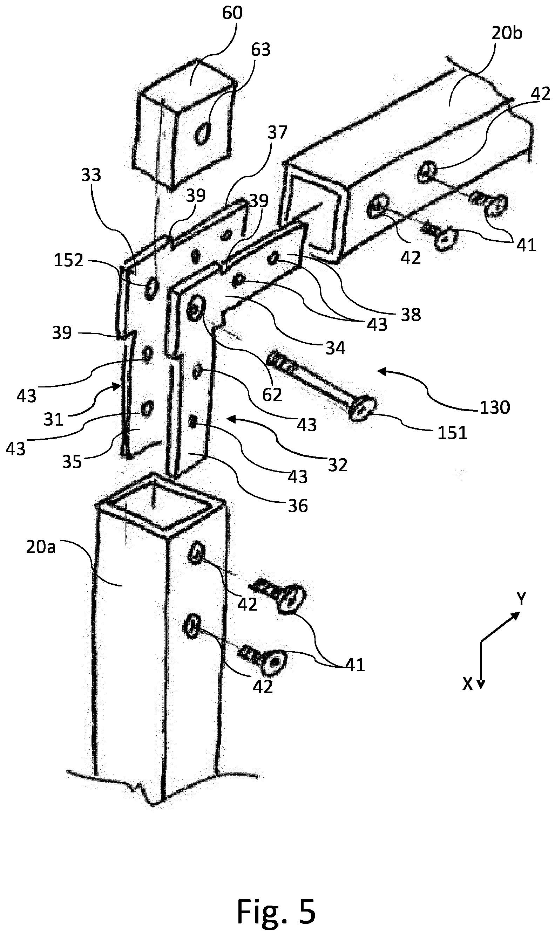

In frame 11, joints 30 connect the three tubular beams 20a, 20b, 20c together. In a showcase according to the invention, however, there may also be portions of frame in which there are only two tubular beams, as shown in fig. 5. Joint **130** shown in fig. 5 is completely similar to joint 30 just described, except that it is lacking the attachment block, since it does not need to connect any beam in direction Z. The elements of joint 130 are therefore substantially identical to those of joint 30 and are not described herein, while in fig. 5, the same reference numerals used for joint 30 are used; the only difference is screw **151,** which is inserted in through holes 62 and 63 and is screwed into a threaded hole **152** formed in the middle portion 33 of plate 31.

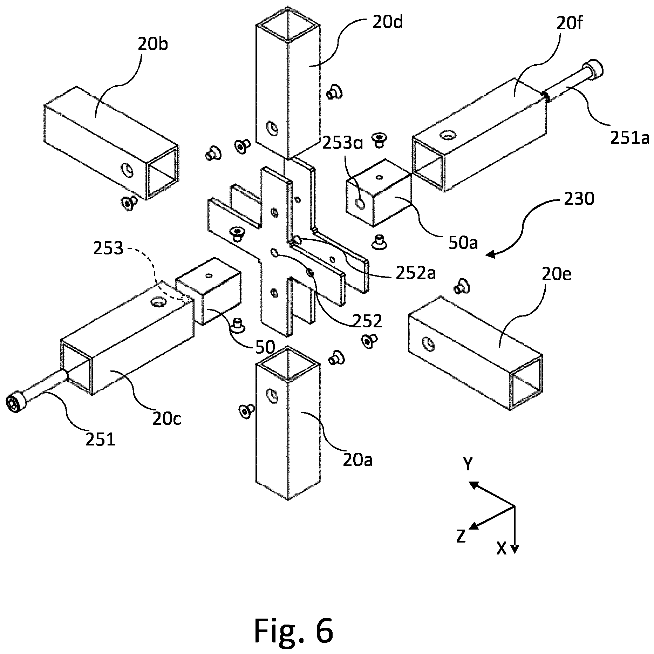

In a showcase according to the invention, there may also be portions of frame in which there are multiple tubular beams, such as six tubular beams, as shown in figure 6. Joint **230** shown in fig. 6 is similar to joint 30 described above, however, it has two attachment blocks and plates with four attachment wings. The elements of joint 230 therefore are substantially identical to those of joint 30 and are not described herein, while in fig. 6, the same reference numerals used for joint 30 are used, except for the different parts described hereinafter.

Joint 230 can connect four tubular beams 20a, 20b, **20d, 20e** at 90° with respect to one another, two by two opposite at 180° and two tubular beams 20c, **20f**, opposite at 180° with respect to each other and orthogonal to the plane of the four tubular beams 20a, 20b, 20d, 20e. To this end, joint 230 comprises two plates **231** and **232** each with four attachment wings, 35, 35a, 37, 37a and respectively 36, 36a, 38, 38a; these attachment wings are fixed to the tubular beams in a totally identical manner to what was seen for joint 30. Moreover, joint 230 comprises two attachment blocks 50 and **50a**, opposite at 180° and fixed to plates 231 and 232; these attachment blocks are fixed to the plates and to the tubular plates in the same manner as provided for joint 30, i.e. by means of screws, except that screws **251, 251a** are arranged in an opposite manner with respect to joint 30, i.e. they pass in through holes **253, 253a** formed in the attachment blocks 50, 50a and are screwed in threaded holes **252, 252a** formed into the middle portions 33, 34 of plates 231, 232. In joint 230, there is no spacer block between plates 231 and 232, which therefore are integral with each other through the attachment to the tubular beams 20.

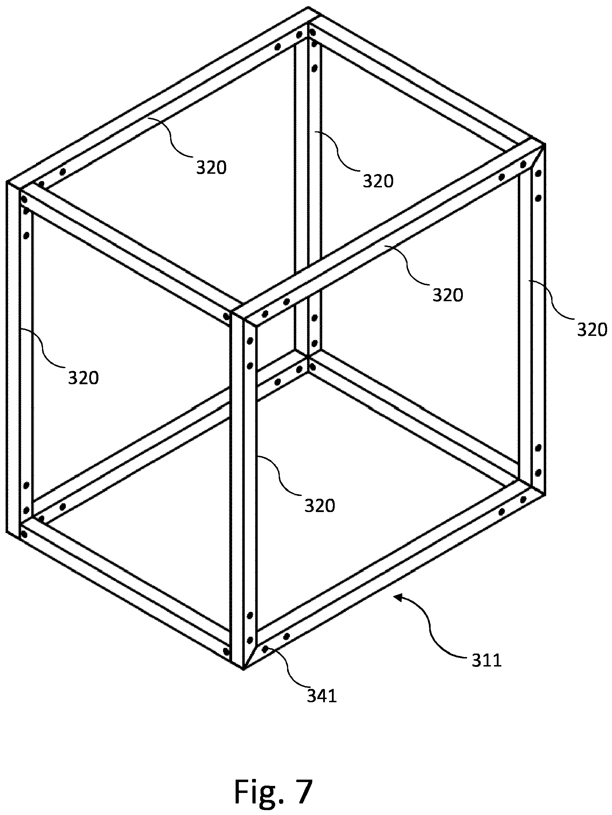

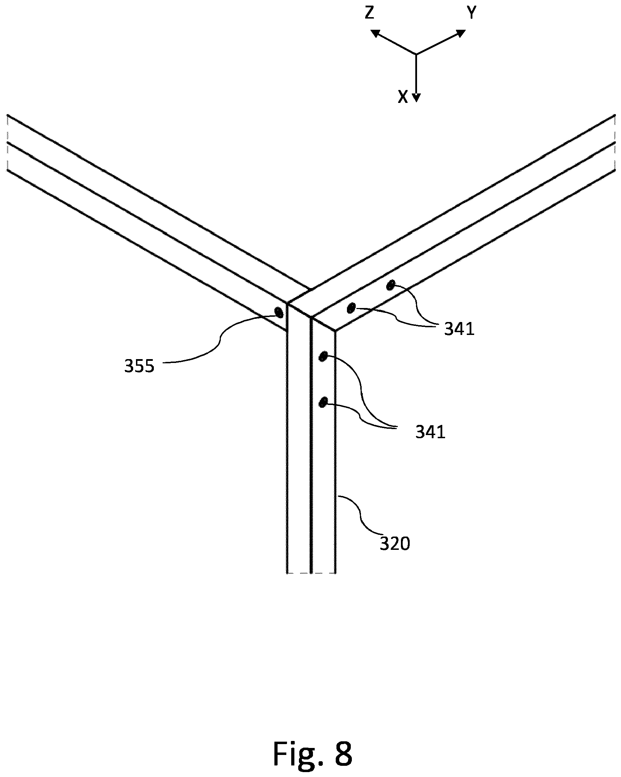

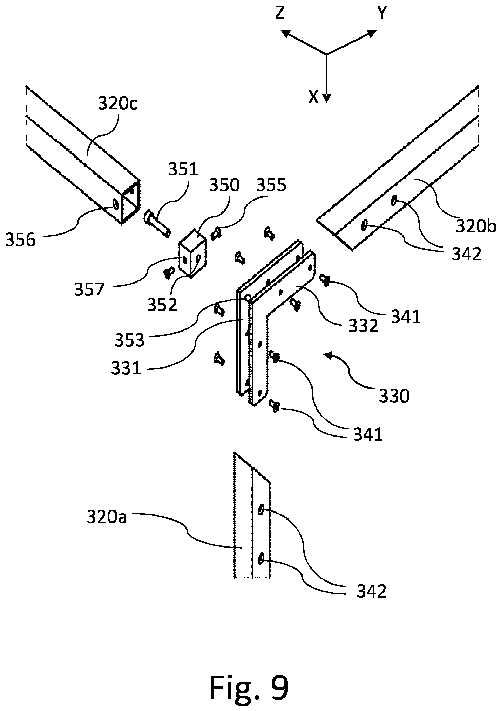

Figure 7 shows a different embodiment of frame **311** of showcase 10. Frame 311 comprises tubular beams **320** with quadrangular section (in particular, square) connected together by joints **330,** one of which is better shown in figures 8 and 9.

Joint 330 shown connects three tubular beams 320 together, arranged at 90° each one with respect to the plane of the others, i.e. according to three classical orthogonal axes **X, Y, Z.** Joint 330 comprises two plates **331** and **332,** flat and parallel to each other according to the plane defined by axes XY. Plates 331 and 332 are substantially L-shaped, with respective attachment wings each: one wing **335** and one wing **337** of plate 331, one wing **336** and one wing **338** of plate 332. Wings 335 and 336 are directed according to axis X, while wings 337 and 338 are directed according to axis Y.

The attachment wings 335 and 336 are inserted in a first one of the tubular beams 320, also indicated with reference numeral **320a**, oriented according to axis X; the attachment wings 337 and 338 are inserted in a second one of the tubular beams 320, also indicated with reference numeral **320b,** oriented according to axis Y. The attachment wings -338 are attached to the respective tubular beams 320a, 320b by means of first attachment screws **341,** inserted in through holes **342** formed in the tubular beams 320a, 320b and screwed into threaded holes **343** formed in the attachment wings 335-338. In frame 311 shown, two attachment screws 341 are provided for each of the attachment wings 335-338. It is noted that the attachment wings 335-338 are perfectly lying along opposite inner walls of the tubular beams 320, due to the quadrangular section of the latter.

Joint 330 also comprises an attachment block **350,** with parallelepiped shape, attached to plate 331, opposite to plate 332. The attachment block 350 has a section matching the internal section of the tubular beams 320, so as to be able to insert therein with forcing or with minimal clearance. The attachment block 350 is inserted in a third one of the tubular beams 320, oriented according to axis Z and also indicated with reference numeral **320c,** different from the tubular beams 320a and 320b in which the attachment wings 333-338 are inserted and attached. The attachment block 350 is fixed to plate 331 by means of a second attachment screw **351,** inserted in a through hole **352** formed in the attachment block 350 and screwed into a threaded hole **353** formed in plate 331. Moreover, the attachment block 350 is fixed to beam 320c by means of two third attachment screws **355,** inserted in respective through holes **356** formed in beam 320c and screwed into respective threaded holes **357** formed in the attachment block 350.

The two plates 331 and 332 are mutually spaced apart and a spacer block (similar to block 60) may optionally be arranged between them; in joint 330 shows there is no spacer block.

Plates 331 and 332 are fully inserted into the corresponding beams 320 (having no intermediate portion similar to the intermediate portions 33-34 of joint 30). The tubular beams 320a and 320b have ends cut at 45° so as to abut on each other, thereby completely hiding plates 331 and 332 from view; in contrast, beam 320c has ends cut at 90°, having to abut to the side of beams 320a and 320b. It is noted that a hole (not shown in figure) is formed on the side of these beams for the passage of screw 351.

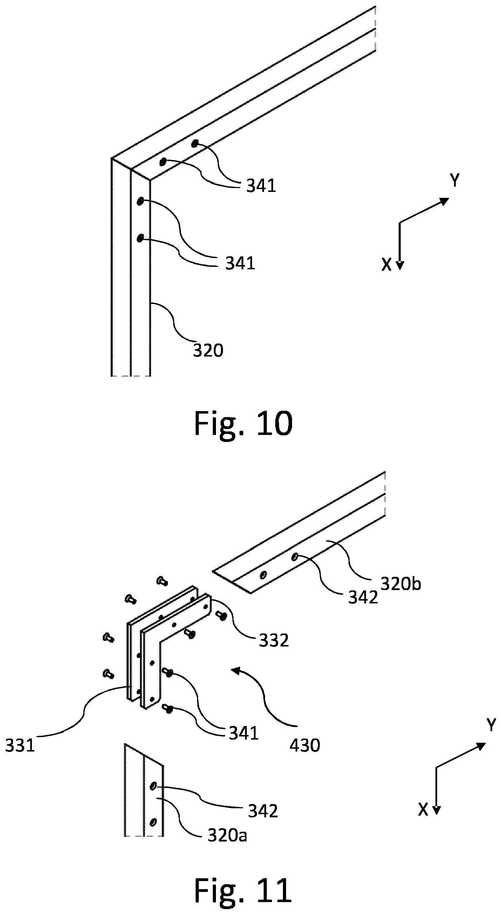

In frame 311, joints 330 connect the three tubular beams 320a, 320b, 320c together. In a showcase according to the invention, however, there may also be portions of frame in which there are only two tubular beams, as shown in fig. 10 and 11. Joint **430** shown in fig. 10 and 11 is completely similar to joint 330 just described, except that it is lacking the attachment block, since it does not need to connect any beam in direction Z. The elements of joint 430 therefore are substantially identical to those of joint 330 and are not described herein, while in fig. 10 and 11, the same reference numerals used for joint 330 are used.

Of course, other configurations are possible, while not departing from the scope defined by the following claims. In particular, joints may be provided in which the plates have any a number of attachment wings from two to six, and/or in which zero to two attachment blocks are provided, in any combination. Moreover, depending on the circumstances and the strength requirements, a spacer block may be or not provided between the two plates. The tubular beams may have ends cut at 45° or 90°.

## Claims

1. Museum showcase (10) having a load-bearing frame (11; 311) comprising tubular beams (20; 320) with quadrangular section connected together by at least one joint (30; 130; 230; 330; 430), **characterised in that** the joint (30; 130; 230; 330; 430) comprises two flat and parallel plates (31, 32; 331, 332), wherein each plate (31, 32; 331, 332) comprises at least two attachment wings (35-38; 335-338), wherein the two attachment wings of each plate are respectively inserted in a first (20a; 320a) and a second (20a; 320a) of the tubular beams (20; 320) and fixed to them.

2. Museum showcase according to claim 1, wherein the joint (30; 230; 330; 430) also comprises an attachment block (50, 50a; 350) having a parallelepiped shape, fixed to a first of the two plates (31, 32; 331) on the opposite side with respect to the second of the two plates (32, 31; 332), inserted in a third of the tubular beams (20c; 320c) of the frame, different from the first and second tubular beams in which the attachment wings (35-38; 335-338) are inserted and fixed, and fixed to the third of the tubular beams (20c; 320c).

3. Museum showcase according to claim 1 or 2, wherein the joint (30; 130) also comprises a spacer block (60) with a parallelepiped shape, arranged between the plates (31, 32) and fixed to them.

4. Museum showcase according to claim 2, wherein the attachment block (50, 50a; 350) has a section matching the internal section of the tubular beams (20c; 320c), so as to be able to insert therein with forcing or with minimal clearance.

5. Museum showcase according to claim 1, wherein the joint (30; 130; 230; 330; 430) comprises first attachment screws (41; 341), inserted in through holes (42; 342) in the first and second beams (20a, 20b; 320a, 320b) and screwed into threaded holes (43; 343) formed in the attachment wings (35-38; 335-338) of the plates.

6. Museum showcase according to claim 3, wherein the spacer block (60) is outside of the tubular beams (20), abutting at the ends thereof.

7. Museum showcase according to claim 1, wherein each plate (31, 32) comprises three or four attachment wings (35-38).

8. Museum showcase according to claim 1, wherein the joint also comprises two attachment blocks (50, 50a) having a parallelepiped shape, fixed to a middle portion (33, 34) of a respective one of the two plates (31, 32) on the opposite side with respect to the other of the two plates (32, 31), inserted in a third (20c) and a fourth (20f) of the tubular beams of the frame (11), different from the first (20a) and second (20b) tubular beams in which the attachment wings (35-38) are inserted and fixed, and fixed to the third and fourth of the tubular beams.

9. Museum showcase according to claim 1, wherein the plates (31, 32) comprise abutment seats (39) for the tubular beams (20a, 20b), formed between the attachment wings (35-38) and a middle portion (33, 34), so that the middle portion cannot enter inside the tubular beams.

10. Museum showcase according to claim 1, wherein the plates (331, 332) are completely inserted in the tubular beams (320a, 320b, 320c), cut at 45°.
